# EUROPEAN PATENT SPECIFICATION

(11) **EP 0 681 598 B1**
(45) Date of publication and mention of the grant of the patent: **10.09.1997**
(21) Application number: 94905181.7
(22) Date of filing: 28.01.1994
(51) Int. Cl.: C08L 101/00, C08L 53/02

(54) **LOW-TEMPERATURE-TOLERANT GELS**
TIEFTEMPERATURFESTIGE GELE
GELS TOLERANT LES BASSES TEMPERATURES

(30) Priority: 01.02.1993 GB 9301929
(43) Date of publication of application: 15.11.1995
(73) Proprietor: RAYCHEM LIMITED, Dorcan, Swindon, Wiltshire SN3 5HH (GB)
(72) Inventor: HAMMOND, Philip James, Wotton Bassett, Wiltshire SN4 8BJ (GB); HUDSON, John Michael, Swindon, Wiltshire SN1 4LW (GB); GRAULUS, Hendrik, B-3020 Veltem-Beisem (BE)
(74) Representative: Jay, Anthony William
(86) International application number: GB9400167
(87) International publication number: WO9418273

(56) References cited:
- EP-A- 0 236 918
- EP-A- 0 520 515
- WO-A-90/05166
- DE-A- 3 306 439
- FR-A- 2 162 174
- FR-A- 2 225 497
- GB-A- 2 204 588
- US-A- 3 830 767
- US-A- 5 093 422
- DATABASE WPI Week 9215, Derwent Publications Ltd., London, GB; AN 92-120235 'tackifier adhesive composition ...' & JP,A,4 063 887 (MODERN PLAS K.K.) 28 February 1992
- DATABASE WPI Week 9134, Derwent Publications Ltd., London, GB; AN 91-248103 'hot melt adhesive composition ...' & JP,A,3 160 083 (KANEBO NSC K.K.) 10 July 1991
- DATABASE WPI Week 9244, Derwent Publications Ltd., London, GB; AN 92-360928 'propylene resin composition ...' & JP,A,4 261 450 (MITSUI TOATSU CHEM. INC) 17 September 1992

## Description

This invention relates to new and technically superior gel compositions comprising a styrene-(ethylene/propylene)-styrene (SEPS) block copolymer and at least 300 parts by weight (preferably at least 400 parts by weight, more preferably at least 500 parts by weight) of extender liquid per 100 parts by weight of the block copolymer, which liquid extends and softens the ethylene/propylene polymer blocks of the said copolymer. These proportions of extender can alternatively be expressed as percentages by weight of the copolymer, thus: 300=25%. 400=20%. 500=17%.

The proportions of ethylene/propylene units incorporated in the polyalkylene blocks of the SEPS copolymer may be varied from 100% to as low as 20% derived from a mixed isoprene/butadiene feedstock which is copolymerised and hydrogenated to produce the SEPS triblocks having mixed ethylene/propylene : ethylene/butylene polyalkylene mid-blocks. Various benefits of the SEPS gels are produced by the presence of the ethylene/propylene units, and increasing proportions of at least 30% or 40%, preferably at least 50%. of the ethylene/propylene units in the polyalkylene mid-blocks are preferred. A particularly preferred SEPS block copolymer for the present purposes has polyalkylene mid-blocks comprising about 60% ethylene/propylene units and about 40% ethylene/butylene units. Higher proportions of ethylene/propylene units, such as at least 80% or 90%. and single-unit alkylene blocks of substantially 100% ethylene/propylene units are also useful. Proportions are percentages by weight.

It is contemplated that alkylene units other than ethylene/butylene could be incorporated with the ethylene/propylene units to form other useful SEPS block copolymers, but ethylene /butylene is preferred.

Known gels made from styrene-(ethylene/butylene)-styrene (SEBS) block copolymers, and test methods for defining and characterising gels. are described in WO-A-8800603 and WO-A-9005166.

The SEPS gels. however. tend to have improved hightemperature performance and improved ability to retain the extender liquid when subjected to pressure in various end uses. The SEPS gels also tend to have higher tack than the known SEBS gels. thus reducing the need for added tackifiers to achieve a desired level of adhesion to surfaces with which they are in contact in end use.

Both the SEPS gels and the known SEBS gels can suffer from an undesirable degree of hardening on cooling to -40°C. which can limit the usefulness of these gels in outdoor technical applications such as sealing electrical cables or enclosures. The present invention alleviates this effect without undue sacrifice of other properties of the gels.

The invention accordingly provides a gel composition comprising a styrene-alkylene-stywene block copolymer whose polyalkylene blocks comprise ethylene/propylene units, and at least 300 parts by weight of extender liquid per 100 parts by weight of the block copolymer. which liquid is at least partly poly(alpha-olefin) and extends and softens the polyalkylene blocks of the said copolymer.

The poly(alpha-olefin) extenders are preferably used in mixtures with the previously used extender oils, which include, for example. those available from Fina Chemicals under the Trade Mark "Vestan A360B" (preferred). "Drakeol 34" from Penreco. and "Witco 380PO" from Witco. At least 10% preferably at least 20%. more preferably at least 30%, replacement of the known oils by the poly(alpha-olefin) extenders is preferred. Up to 90%, preferably up to 80%. more preferably up to 70% replacement has been found to provide advantageous processing characteristics. Mixtures of known oil:poly(alpha-olefin) in the range from 30:70 to 70:30 are currently preferred. and mixtures ranging from less than 70:30 down to 80:20 or 90:10 may be preferable for some purposes. These percentages and proportions are by weight based on the weight of the extender mixture.

The SEPS gels are preferably soft, high-temperature-slump-resistant, springy gel compositions. by which is meant liquid-extended polymer compositions having an ultimate elongation (measured by ASTM D412 modified as described below) greater than 100%, with substantially elastic deformation (i.e. substantially no hysteresis) to an elongation of at least 100%: ultimate tensile strength (ASTM D412) less than 1 MegaPascal: dynamic storage modulus (as hereinafter described) less than 50000 Pascals: and substantially zero slump at temperatures up to 100°C, preferably up to 120°C, more preferably up to 135°C, and especially up to 150°C.

The invention for some end purposes is more particularly concerned with such gel compositions comprising from 4% to 20% by weight of the SEPS copolymer and at least 500 parts by weight of extender liquid per 100 parts by weight of the polymer, in which the SEPS copolymer comprises more than 50%, preferably more than 75%, more preferably more than 90%, and especially more than 95%, by weight, or substantially all, of the total gelling polymer present. Various additives may be present, for example the tackifiers described in WO-A-9005166 or the polyphenylene oxide described in WO-A-8800603, or styrene-alkylene di-block copolymers for reducing the loss of extender liquid as described in our co-pending British Application 91192612.7. However, the superior performance of the present SEPS gels may reduce or eliminate the need for such additives.

The SEPS gels, with which the present invention is concerned, are well suited, inter alia, for re-enterable sealing of electrical connection enclosures. The invention accordingly includes a device comprising an enclosure for electrical conductors. a body of a gel composition according to this invention. and means for holding the body of gel composition in use against the conductors and/or against parts of the enclosure so as to protect the conductors from contamination and/or corrosion. In these and other uses. the gels are subjected to continuous pressure. in view of which their ability to retain the extender liquid is important.

The composition may be "substantially free of" polystyrenecompatible components which significantly raise or lower the softening temperature (Ts) of the composition, either in the sense that substantially no such components are present, or in the sense that the quantities of such components which are present are not sufficient to produce a significant effect on the softening temperature. The use of such components significantly to raise the softening temperature (Ts) is claimed in the aforementioned WO-A-8800603 and may be used in the present case. Lowering of Ts is generally undesirable for the present purposes. and the extender will therefore preferably be substantially non-aromatic. meaning that it contains less than 2%, more preferably less than 1%, and especially substantially zero, aromatic material.

The aforementioned hardening at low temperatures may be alleviated by using as the extender various low-pour-point naphthenic oils, for example Edelex 27 (Trade Mark) from Shell, but these tend unacceptably to lower Tₛ. However, the poly(alpha-olefin) extenders specified for the SEPS gels of present invention not only tend not to lower Tₛ, but raise Tₛ considerably, while still reducing the hardening to acceptable levels. While reductions in the hardening are also observed when the poly(alpha-olefin) extenders are used in the known SEBS gels, these gels are less desirable because of unexpectedly limited compatibility of the extenders with the SEBS polymers. The greater softness of the poly(alpha-olefin)-extended gels makes them easier to install in sealing arrangements at low temperatures.

Owing to their higher softening temperatures, it is found that SEPS gels provide improvements in slump-resistance at elevated temperatures compared with similar SEBS gels, while still achieving desirable "softness" and "springiness". Slumping usually occurs some tens of degrees above the onset of softening temperature Ts. The present gels are thus clearly distinguished from known cable-filling materials which are designed to slump and flow in use.

Even at high levels of extender liquid, the compositions of this invention remain substantially stable, homogeneous, and relatively free from exudation of extender, and various properties are improved while maintaining an adequate balance of other properties. The gel compositions when adhered to another surface, or to themselves, tend to be removable cleanly by adhesive release at the contact interface, substantially without any cohesive failure within the body of the gel composition.

Especially interesting SEPS block copolymers for the purposes of this invention are those wherein the copolymer comprises 20 to 50 weight percent, preferably 25 to 40 weight percent, especially 28 to 35 weight percent. of the polystyrene blocks.

The block copolymer preferably comprises 80 to 50 weight percent, more preferably 75 to 60 weight percent. especially 72 to 65 weight percent, of the polyalkylene blocks. The polyalkylene blocks preferably comprise substantially fully hydrogenated poly(ethylene/propylene) blocks, especially those predominantly (e.g. >90% or >95%) comprising units of formula.

-(CH₂ CH (CH₃) CH₂ CH₂)-

possibly with small amounts of isomers such as

-(CH₂-C (CH₃) (CH₂ CH₃))-

-(CH₂-CH-[CH(CH₃)₂])-

Cross-linking of the composition, although not essential. may be effected if desired as described in WO-A-8800603 and EP-A-0224389, and may produce further improvements in properties.

Within the specified range of properties for the gels according to this invention, those having an ultimate elongation of at least 200% are preferred. Substantially elastic deformation up to an elongation of at least 200% is also preferred.

The poly(alpha-olefin) extender liquids useful in the compositions of this invention comprising the block copolymer may be selected from those available by simple trial and error. The preferred materials are those available from Ethyl Corporation under the Trade Mark "Ethylflo". The extenders preferably have a minimum boiling point higher than the softening point of the block copolymer(s) and any additional polymer or copolymer. The pour point of the poly(alpha-olefin) extenders is preferably not higher than -30°C. more preferably not higher than -40°C. and most preferably not higher than -50°C.

The poly(alpha-olefin) extenders may be produced by reaction of ethylene derived from natural gas and/or from petroleum cracking to form C4-C30 linear alpha-olefins, mixtures of which are then polymerised to make the poly(alpha-olefins) in a range of compositions and viscosities.

The commercially available grades include "Ethylflo 164" comprising about 84.4% trimer and 14.5% tetramer with a pour point of -65°C; "Ethylflo 166" comprising about 33.9% trimer, 43.5% tetramer, 17.4% pentamer and 3.8% hexamer with a pour point of -63°C; "Ethylflo 168" comprising about 6% trimer, 55.7% tetramer, 27.5% pentamer, 7% hexamer and 4.1% heptamer with a pour point of -60°C; and "Ethylflo 170" comprising about 1.1% trimer, 42.5% tetramer. 32.3% pentamer, 11.8% hexamer, and 12.2% heptamer with a pour point of -54°C. The viscosities in centi-Stokes at -40°C of these "Ethylflo" grades 164 to 170 are respectively about 2490, 7877, 18305 and 32650. whereas the previously mentioned A360B oil is solid at -40°C.

The known extender oils preferably used in the mixtures with the poly(alpha-olefins) comprise a substantially non-aromatic paraffinic/naphthenic mineral oil of paraffinic:naphthenic (P:N) carbon ratio within the range from 1.75:1 to 5:1, preferably 1.77:1 to 3:1, more preferably 1.9: 1 to 2.7:1, and most preferably 2.2: 1 to 2.5:1.

These extender oils. especially at the preferred P:N ratios, tend to produce gels with characteristics especially well suited to the purposes of the aforementioned re-enterable enclosures. Preferably, the oil has a relative density at 20°C according to ASTM D2140 within the range from 0.861 to 0.865, preferably 0.862 to 0.864.

The compositions of this invention are preferably prepared by mixing the extender with the block copolymer(s) at a temperature not less than the glass transition temperature of the polystyrene blocks of the SEPS block copolymer, as described generally (for SEBS) in WO-A-8800603. Mastication or other mixing techniques at lower temperatures, perhaps with the aid of volatile solvents, may however be used if the resulting composition is acceptable for the intended end use.

The compositions according to the various aspects of this invention can be made having a wide range of physical properties, such as dynamic storage modulus, ultimate elongation. and tear strength, to suit particular end use requirements. The preferred compositions having an ultimate elongation of at least 200% (ASTM D412) are particularly useful as sealing materials. The compositions preferably contain more than 500, and preferably not more than 5000, parts by weight of extender liquid per 100 parts by weight of the block copolymer.

It may be useful to use various additives for various purposes in any of the compositions of this invention. Such additives may be stabilisers, antioxidants, flame retardants, tackifiers, and corrosion inhibitors. It is useful to use antioxidants in all the compositions of this invention.

The compositions of this invention have numerous uses as elastomeric materials and in particular may be used as sealing materials for electrical connection enclosures, for example as illustrated in published European Patent application 0108518 and 0191609, although the compositions of this invention will have many and varied uses depending on the properties desired and the temperatures to be encountered.

Gel or gelloid compositions within the scope of this invention are preferably defined by the criteria (1) to (8) derived from Tests I to V as described in WO-A-8800603, of which criteria preferably not more than one (not (1) or (2)) will be outside the specified ranges.

The preferred SEPS block copolymers for the present invention are selected from those commercially available under the Trade Mark "SEPTON" from Kuraray of Japan, SEPTON 4055, 4155 and 2006 being the preferred grades. The presence of the required range of properties for optimised gel compositions according to the present invention may be determined by simple trial and error against the aforementioned criteria.

Examples of the SEPS gels using the poly(alpha-olefin) extenders according to this invention will now be described in comparison with corresponding gels using previously known extenders.

The polymers indicated in the following table were masticated together with the poly(alpha-olefin) extender (E) and/or the aforementioned Fina Vestan A360B (A) or Edelex 27 extender oil in a Z-blade mixer for 50 minutes at 195°-210°C under vacuum. The oil/polymer mixture contained the indicated percentage by weight of the polymer. The dynamic storage modulus (G'), softening point (Ts), elongation at break (EB), and tensile strength (T.S.), were determined as follows.

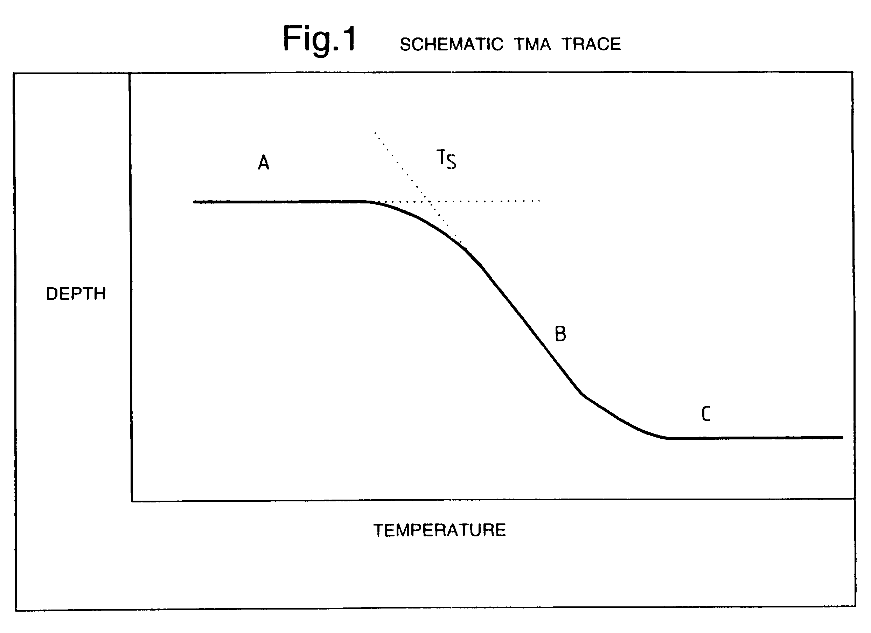

In the TMA softening point test, a weighted piston is placed on top of a gel sample. The sample is then heated, and the deflection of the probe measured as a function of temperature. The trace produced has a flat, linear region (A), followed by a transition (melting) region (B) followed by a second flat region (C) where the piston has reached the limit of its travel. This is shown schematically in the accompanying Figure 1. The quoted softening point Ts is the temperature where extrapolated straight lines through A and B intersect.

Our method used a Du Pont thermomechanical analyser (TMA-942) with a Du Pont 1090 thermal analyser. A 2.5 mm diameter flatbottomed quartz probe was used with a 2g load. The gel sample was a disc, 6.25 mm in diameter and 2 mm thick. The sample was equilibrated at -40°C for 5 minutes, then heated to 300°C at a rate of 5°C/minute.

Tensile Strength (T.S.) and elongation to break (E.B.) testing was according to ASTM D412, except that BS 903 Type 2 dumb-bells with a gauge length of 40 mm were used. The pulling speed was 100 mm/minute.

G' (modulus) was measured using a Bohlin VOR-melt rheometer and software. The rheometer was used in oscillation mode, with a 25 mm diameter parallel plate measuring system and a 90 gcm torsion bar transducer. Gel samples were 25 mm diameter discs, of thickness 3±0.2 mm. Measurements were made at the indicated temperatures at an oscillation frequency of 0.1 Hz. The instrument was run at its maximum angular strain, corresponding to a strain of about 6% in these samples.

The results are shown in the following table.

| Gel Polymer (Wt.%) | Extender | Modulus G' at 0.1 Hz, kPa | | | | Ratio G' -40°C/20°C | Ts (°C) | E.B. (%) | T.S. (MPa) |
|---|---|---|---|---|---|---|---|---|---|
| | | 20°C | 0°C | -20°C | -40°C | | | | |
| Septon 4055 (12) | A360B | 5.41 | 5.61 | 16.4 | 61.1 | 11.29 | 132 | >1800 | >0.51 |
| | A/E 70:30 | 7.61 | 5.82 | 4.22 | 16.8 | 2.21 | 145 | 1616 | 0.78 |
| | A/E 50:50 | 6.6 | 11.2 | 5.1 | 16.2 | 2.45 | 148 | 1619 | 0.86 |
| | A/E 30:70 | 9.2 | 12.5 | 4.8 | 12.5 | 1.36 | 154 | 1513 | 0.58 |
| | Ethylflo 168 | 6.27 | 7.11 | 11 | 26.7 | 4.26 | 162 | >1800 | >0.46 |
| | Edelex 27 | 9. 11 | 9.28 | 14.9 | 31.4 | 3.45 | 86 | >1800 | >0.66 |
| | Ethylflo 166 | 7.33 | 7.39 | 11.1 | 36.3 | 4.95 | 151 | >1800 | >0.68 |
| | Ethylflo 170 | 7.92 | 10.2 | 19.8 | 24 | 3.03 | 172 | >1800 | >0.71 |
| Septon 4055 (6) | A360B | 1.46 | 1.52 | 7.1 | 263 | 180.14 | 110 | 1700 | 0.24 |
| | Ethylflo 168 | 0.78 | 0.82 | 3.13 | 4.69 | 6.01 | 109 | 867 | 0.07 |
| Septon 4055 (18) | A360B | 17.9 | 21.4 | 41.8 | 326 | 18.21 | 152 | >1800 | >1.03 |
| | Ethylflo 168 | 16.5 | 27.9 | 42.2 | 32.6 | 1.98 | 190 | 1795 | 0.93 |
| Septon 4055/ Kraton G1701 (11:4) | A360B | 8.5 | 9.5 | 27.8 | 76 | 8.94 | 138 | >1468 | >0.34 |
| | Ethylflo 168 | 6.12 | 5.52 | 7.51 | 36 | 5.88 | 160 | | |
| Septon 2005 (12) | A360B | 4.95 | 5.93 | 8.13 | 50.1 | 10.12 | 84 | 1648 | 0.26 |
| | Ethylflo 168 | 3.84 | 3.99 | 4.79 | 6.49 | 1.69 | 100 | | |
| Septon 2006 (12) | A360B | 4.59 | 4.17 | 5.29 | 36.8 | 8.02 | 131 | 1606 | 0.46 |
| | Ethylflo 168 | 2.75 | 2.62 | 2.86 | 3.64 | 1.32 | 162 | | |

A/E = weight ratio of A360B extender oil to Ethylflo poly(alpha-olefin).

Septon 4055 is the aforementioned block copolymer containing mixed EP/EB mid-blocks, while Septon 2005 and 2006 contain only EP mid-blocks. The weight % of styrene blocks in the total block copolymer is about 20% for 2005 and about 35% for 2006.

The Ratio of G' in the table clearly shows that the known A360B extender oil produces gels which become at least 8 or 10 times hardcr on cooling from 20°C to -40°C. The Ethylflo poly(alpha-olefin) extenders, on the other hand, limit this hardening ratio to less than half that produced by the A360B, in most cases less than one third or even less than one tenth. The Edelex 27 naphthenic extender oil similarly limits the hardening, but severly reduces Tₛ from 132°C to only 86°C, whereas the Ethylflo extenders tend to increase Tₛ.

It has been observed that gels of styrene triblock copolymers having a EB mid-blocks or mixed EB/EP mid-blocks show a degree of hysteresis in their modulus G' on heating and cooling, whereas triblocks having only EP mid-blocks show relatively little or no such hysteresis. This lack of hysteresis means that the EP mid-block copolymers recover their mechanical properties more quickly from low temperature excursions.

## Claims

1. A gel composition comprising a styrene-alkylene-styrene block copolymer whose polyalkylene blocks comprise ethylene/propylene units, and at least 300 parts by weight of extender liquid per 100 parts by weight of the block copolymer. which liquid is at least partly poly(alpha-olefin) and extends and softens the polyalkylene blocks of the said copolymer.

2. A composition according to claim 1, wherein the extender liquid comprises a mixture of an extender oil with the poly(alpha-olefin) in a proportion of 10 to 90% by weight of the poly(alpha-olefin) based on the weight of the mixture.

3. A composition according to claim 2, wherein the proportion of the poly(alpha-olefin) is 20 to 80%, preferably 30 to 70% by weight, of the mixture.

4. A composition according to any preceding claim, wherein the proportion by weight of the ethylene/propylene units in the polyalkylene blocks is at least 20%, more preferably at least 30%, still more preferably at least 40%, and especially preferably at least 50%.

5. A composition according to claim 4, wherein the proportion of ethylene/propylene units is at least 80%, or at least 90%, or substantially 100%.

6. A composition according to any preceding claim, wherein the polyalkylene blocks include ethylene/butylene units.

7. A composition according to any preceding claim, comprising at least 400, preferably at least 500, parts by weight of the extender liquid per 100 parts by weight of the said copolymer.

8. A composition according to any preceding claim, having an ultimate elongation greater than 100%, preferably at least 200% with substantially elastic deformation to an elongation of at least 100%.

9. A composition according to any preceding claim having ultimate tensile strength less than 1 MPa.

10. A composition according to any preceding claim having a dynamic storage modulus G' less than 50000 Pa at 0.1 Hz.

11. A composition according to any preceding claim, comprising 4 to 20, preferably 5 to 15, more preferably 6 to 12, weight percent of the said block copolymer.

12. A composition according to any preceding claim, wherein the said block copolymer comprises 20 to 50 weight percent, preferably 25 to 40 weight percent. especially 28 to 35 weight percent, of the polystyrene blocks, and 80 to 50 weight percent, preferably 75 to 60 weight percent, especially 72 to 65 weight percent, of the poly(alkylene) blocks.

13. A composition according to any preceding claim, wherein the poly(ethylene/propylene) blocks predominantly comprise units of formula
-(CH₂ CH (CH₃) CH₂ CH₂)-.

14. A composition according to any preceding claim, wherein the poly(alpha-olefin) extender liquid has a pour point not higher than -30°C, preferably not higher than -40°C, more preferably not higher than -50°C.

15. A device comprising an enclosure for electrical conductors, a body of a gel composition according to any of the preceding claims, and means for holding the body of gel composition in use against the conductors and foragainst parts of the enclosure so as to protect the conductors from contamination and/or corrosion.

## Patentansprüche

1. Gel-Zusammensetzung,
die ein Styrol-Alkylen-Styrol Blockcopolymer, dessen Polyalkylen-Blöcke Ethylen/Propylen-Einheiten aufweisen, und wenigstens 300 Gewichtsteile Extenderflüssigkeit pro 100 Gewichtsteile des Blockcopolymer aufweist, wobei die Flüssigkeit wenigstens teilweise ein Poly(alpha-Olefin) ist und die Polyalkylen-Blöcke des Copolymers streckt und erweicht.

2. Zusammensetzung nach Anspruch 1,
wobei die Extenderflüssigkeit ein Gemisch aus einem Extenderöl mit dem Poly(alpha-Olefin) in einem Anteil von 10 bis 90 Gew.% des Poly(alpha-Olefins) auf der Basis des Gewichts des Gemisches aufweist.

3. Zusammensetzung nach Anspruch 2,
wobei der Anteil des Poly(alpha-Olefin) 20 bis 80 Gew.%, vorzugsweise 30 bis 70 Gew.%, des Gemisches ist.

4. Zusammensetzung nach einem der vorhergehenden Ansprüche,
wobei der Gewichtsanteil der Ethylen/Propylen-Einheiten in den Polyalkylen-Blöcken wenigstens 20%, stärker bevorzugt 30%, noch stärker bevorzugt 40%, und besonders bevorzugt wenigstens 50% ist.

5. Zusammensetzung nach Anspruch 4,
wobei der Anteil der Ethylen/Propylen-Einheiten wenigstens 80%, oder wenigstens 90%, oder im wesentlichen 100% ist.

6. Zusammensetzung nach einem der vorhergehenden Ansprüche,
wobei die Polyalkylen-Blöcke Ethylen/Butylen-Einheiten enthalten.

7. Zusammensetzung nach einem der vorhergehenden Ansprüche,
die wenigstens 400, vorzugsweise wenigstens 500, Gewichtsteile der Extenderflüssigkeit pro 100 Gewichtsteile des Copolymers aufweist.

8. Zusammensetzung nach einem der vorhergehenden Ansprüche,
die eine Bruchdehnung von mehr als 100%, vorzugsweise von wenigstens 200%, bei einer im wesentlichen elastischen Verformung auf eine Dehnung von wenigstens 100% hat.

9. Zusammensetzung nach einem der vorhergehenden Ansprüche,
die eine Zugfestigkeit von weniger als 1 MPa hat.

10. Zusammensetzung nach einem der vorhergehenden Ansprüche,
die einen dynamischen Speichermodul G' von weniger als 50000 Pa bei 0,1 Hz hat.

11. Zusammensetzung nach einem der vorhergehenden Ansprüche,
die 4 bis 20, vorzugsweise 5 bis 15, stärker bevorzugt 6 bis 12, Gewichtsprozent des Blockcopolymers aufweist.

12. Zusammensetzung nach einem der vorhergehenden Ansprüche,
wobei das Blockcopolymer 20 bis 50 Gewichtsprozent, vorzugsweise 25 bis 40 Gewichtsprozent, insbesondere 28 bis 35 Gewichtsprozent, der Polystyrol-Blöcke und 80 bis 50 Gewichtsprozent, vorzugsweise 75 bis 60 Gewichtsprozent, insbesondere 72 bis 65 Gewichtsprozent, der Poly(alkylen)-Blöcke aufweist.

13. Zusammensetzung nach einem der vorhergehenden Ansprüche,
wobei die Poly(ethylen/propylen)-Blöcke überwiegend Einheiten der Formel
-(CH₂CH(CH₃)CH₂CH₂)-
aufweisen.

14. Zusammensetzung nach einem der vorhergehenden Ansprüche,
wobei die Poly(alpha-Olefin) Extenderflüssigkeit einen Fließpunkt von nicht höher als -30 °C, vorzugsweise von nicht höher als -40 °C und stärker bevorzugt von nicht höher als -50 °C hat.

15. Anordnung,
die eine Umhüllung für elektrische Leiter, einen Körper einer Gel-Zusammensetzung nach einem der vorhergehenden Ansprüche und eine Einrichtung aufweist, um den Körper der Gel-Zusammensetzung im Gebrauch gegen die Leiter und gegen Teile der Umhüllung zu halten, um die Leiter gegen Kontaminierung und/oder gegen Korrosion zu schützen.

## Revendications

1. Composition de gel comprenant un copolymère séquencé styrène-alkylène-styrène dont les blocs polyalkylène comprennent des motifs éthylène/propylène, et au moins 300 parties en poids d'un liquide de dilution pour 100 parties en poids du copolymère séquencé, liquide qui consiste au moins partiellement en une poly(alpha-oléfine) et qui dilue et ramollit les blocs polyalkylène du copolymère.

2. Composition suivant la revendication 1, dans laquelle le liquide de dilution comprend un mélange d'une huile diluante avec la poly(alpha-oléfine) en une proportion de 10 à 90 % en poids de la poly(alpha-oléfine) sur la base du poids du mélange.

3. Composition suivant la revendication 2, dans laquelle la proportion de la poly(alpha-oléfine) est comprise dans l'intervalle de 20 à 80 %, de préférence de 30 à 70 % en poids, du mélange.

4. Composition suivant l'une quelconque des revendications précédentes, dans laquelle la proportion en poids des motifs éthylène/propylène dans les blocs polyalkylène est égale à au moins 20 %, avantageusement au moins 30 %, mieux encore au moins 40 % et de préférence au moins 50 %.

5. Composition suivant la revendication 4, dans laquelle la proportion de motifs éthylène/propylène est égale à au moins 80 %, ou au moins 90 , ou pratiquement 100 %.

6. Composition suivant l'une quelconque des revendications précédentes, dans laquelle les blocs polyalkylène comprennent des motifs éthylène/butylène.

7. Composition suivant l'une quelconque des revendications précédentes, comprenant au moins 400, de préférence au moins 500, parties en poids du liquide de dilution pour 100 parties en poids du copolymère.

8. Composition suivant l'une quelconque des revendications précédentes, ayant un allongement à la rupture supérieur à 100 %, de préférence d'au moins 200 % avec une déformation essentiellement élastique à un allongement d'au moins 100 %.

9. Composition suivant l'une quelconque des revendications précédentes, ayant une résistance à la rupture inférieure à 1 MPa.

10. Composition suivant l'une quelconque des revendications précédentes, ayant un module de stockage dynamique G' inférieur à 50 000 Pa à 0,1 Hz.

11. Composition suivant l'une quelconque des revendications précédentes, comprenant 4 à 20, avantageusement 5 à 15, de préférence 6 à 12 % en poids du copolymère séquencé.

12. Composition suivant l'une quelconque des revendications précédentes, dans laquelle le copolymère séquencé comprend 20 à 50 % en poids, de préférence 25 à 40 % en poids, notamment 28 à 35 % en poids des blocs polystyrène, et 80 à 50 % en poids, de préférence 75 à 60 % en poids, notamment 72 à 65 % en poids des blocs poly(alkylène).

13. Composition suivant l'une quelconque des revendications précédentes, dans laquelle les blocs poly-(éthylène/propylène) comprennent de manière prédominante des motifs de formule
- (CH₂ CH (CH₃) CH₂ CH₂) -.

14. Composition suivant l'une quelconque des revendications précédentes, dans laquelle le liquide poly-(alpha-oléfinique) de dilution a un point d'écoulement non supérieur à -30°C, avantageusement non supérieur à -40°C, de préférence non supérieur à -50°C.

15. Dispositif comprenant une enceinte pour des conducteurs électriques, un corps d'une composition de gel suivant l'une quelconque des revendications précédentes, et un moyen pour maintenir le corps de composition de gel lors de l'utilisation contre les conducteurs et/ou contre des parties de l'enceinte de manière à protéger les conducteurs contre une contamination et/ou une corrosion.
